# EUROPEAN PATENT APPLICATION

(11) **EP 4 357 546 A2**
(43) Date of publication of application: **24.04.2024**
(21) Application number: 23204128.5
(22) Date of filing: 17.10.2023
(51) Int. Cl.: E04B 1/344

(54) **A COLLAPSIBLE ENCLOSURE ASSEMBLY**

(30) Priority: 18.10.2022 AU 2022256108
(71) Applicant: CAF Corporation Pty Ltd, 4115 Parkinson QLD (AU)
(72) Inventor: LEONG, Kai Hoong, 70200 Negeri Sembilan (MY)
(74) Representative: Mewburn Ellis LLP

(57) **Abstract**

Embodiments of the present invention generally relate to the technical field of structural construction of a cold room, in particular to an enclosure assembly (1) for cold insulation, of which is collapsible, foldable, portable, mobility and is convenient to assemble and dissemble, wherein said enclosure assembly (1) comprising at least a base (5), at least an upstanding ledge (7) formed on the base (1), a plurality of walls (9) joined perpendicularly to the base (5) or upstanding ledge (7), a roof system (13) dimensioned to engage with the plurality of walls (9) and at least a cooling means (3) to supply cool or chill air to the enclosure assembly (1).

## Description

### TECHNICAL FIELD OF THE INVENTION

Embodiments of the present invention generally relate to the technical field of structural construction of a cold room, in particular to an enclosure assembly for cold insulation, of which is collapsible, foldable, portable, mobility and is convenient to assemble and dissemble.

### BACKGROUND OF THE INVENTION

Cold room, as a type of refrigeration chamber or insulated space is designed to maintain an artificially generated temperature or range of temperatures. Conventional cold rooms typically use a compressor, condenser, fans, and an evaporator to maintain temperature within the unit. As for their application, cold rooms can be used to store a variety of items across industries and are widely known to store temperature-sensitive, perishable items, such as food items, flowers, delicate plants, and pharmaceutical products like vaccines. However, the conventional cold rooms are commonly built within a premise in an immobile and non-collapsible manner due to these applications in long term usage.

Over the years, it can be said with certainty that the applications of cold room or the concept of cold room have been revolutionized whereby the usage of cold rooms is not limited to the above applications anymore. The conventional cold rooms can be transformed into a private meeting room provided for singular events such as business conferences and meetings, or even a private dining area for users or guests to enjoy a dining experience with a selected number of guests.

One of the drawbacks of the conventional restaurants with private dining rooms is that they are not able to cater or accommodate guests who prefer privacy when their private dining rooms are fully occupied. Hence, it would be advantageous to apply cold rooms in this scenario. The application of cold room is also benefiting the conventional restaurants without any private dining room. For outdoor of indoor private functions, events or meetings, the application of cold rooms is also feasible and practicable if the premise is not air-conditioned. However, the applications of cold room in these scenarios would only be possible if the cold rooms can be assembled and disassembled in minutes.

Nevertheless, as mentioned above, the conventional cold rooms are immobile and non-collapsible, preventing them from being used in other applications. Additionally, the conventional cold rooms also require fixed and permanent installation systems such as cooling/heating, ventilating, plumbing, power and process.

Hence, it would be advantageous to alleviate the shortcomings by having the following disclosure therein, particularly having a collapsible enclosure assembly which is able to fit for various applications, which is maintenance-free and non-complaining, and which is portable, movable, foldable and convenient for transportation, assembly and disassembly.

### SUMMARY OF THE INVENTION

Accordingly, it is the primary aim of the present invention to provide a collapsible enclosure assembly which is insulated to preserve optimal temperature within the assembly.

It is yet another objective of the present invention to provide a collapsible enclosure assembly which is air-conditioned.

It is yet another objective of the present invention to provide collapsible enclosure assembly which is able to fit for various applications such as private meeting room, private dining area, storage room and etc.

It is yet another objective of the present invention to provide a collapsible enclosure assembly which can be assembled and disassembled conveniently from/into a compact state.

It is yet another objective of the present invention to provide collapsible enclosure assembly which is portable or movable, thereby easing its transportation.

It is yet another objective of the present invention to provide collapsible enclosure assembly which has modular system, that can be configured in different ways, adapting for different needs and applications.

Additional objects of the invention will become apparent with an understanding of the following detailed description of the invention or upon employment of the invention in actual practice.

According to the preferred embodiment of the present invention the following is provided:
A collapsible enclosure assembly, comprising:
at least a base defined by a plurality of peripheral sides;
at least an upstanding ledge is perpendicularly formed on at least three peripheral sides of the base;
a plurality of walls;
the plurality of walls is interconnecting with the upstanding edges or the base via at least a connecting means;
characterized in that
one of the plurality of walls is a left wall, wherein the left wall comprises at least two left panels wherein the first left panel's
bottom side is joined with the left upstanding ledge and the first left panel's top side is joined with the second left panel with at least an additional connecting means;
one of the plurality of walls is a right wall, wherein the right wall comprises at least two right panels wherein the first right panel's bottom side is joined with the right upstanding ledge and the first right panel's top side is joined with the second right panel with at least an additional connecting means;
the connecting means is a hinge, enabling the plurality of walls foldable or pivotable from a compact configuration to an operative configuration or from an operative configuration to a compact configuration;
the collapsible enclosure assembly further comprising a roof system dimensioned to operatively engage the plurality of walls in the operative configuration to enclose the plurality of walls, forming the enclosure assembly.

In another embodiment of the present invention the following is provided:
A collapsible enclosure assembly, comprising:
at least a base defined by four peripheral sides;
at least an upstanding ledge is perpendicularly formed on three peripheral sides of the base;
a plurality of walls comprising a front wall, a left wall, a right wall and a rear wall;
at least a connecting means interconnecting the left wall, the right wall, the rear wall and the respective upstanding ledge respectively;
characterized in that
the left wall comprises at least two left panels wherein the first left panel's bottom side is joined with the left upstanding ledge and the first left panel's top side is joined with the second left panel with at least an additional connecting means;
the right wall comprises at least two right panels wherein the first right panel's bottom side is joined with the right upstanding ledge and the first right panel's top side is joined with the second right panel with at least an additional connecting means;
the front wall is joined with the front peripheral side with at least an additional connecting means;
the connecting means is a hinge, enabling the plurality of walls foldable or pivotable from a compact configuration to an operative
configuration or from an operative configuration to a compact configuration;
the collapsible enclosure assembly further comprising a roof system dimensioned to operatively engage the plurality of walls in the operative configuration to enclose the plurality of walls, forming the enclosure assembly.

### BRIEF DESCRIPTION OF THE DRAWINGS

Other aspect of the present invention and their advantages will be discerned after studying the Detailed Description in conjunction with the accompanying drawings in which:
FIG. 1 illustrates an exemplary collapsible enclosure assembly in an operative configuration according to the preferred embodiment of the present invention.
FIGS. 2-A and 2-B illustrates the exemplary front perspective view and back perspective view of the collapsible enclosure assembly in a compact configuration.
FIG. 3 illustrates an exemplary connecting and folding means of the collapsible enclosure assembly in one embodiment of the present invention.
FIGS. 4-A to 4-E illustrates an exemplary folding process of the collapsible enclosure assembly from a compact configuration to an operative configuration.
FIG. 5 illustrates an exemplary joining means of the roof system of the collapsible enclosure assembly in one embodiment of the present invention.
FIG. 6 illustrates an exemplary fastening means of the various panels of the collapsible enclosure assembly in one embodiment of the present invention.
FIGS. 7-A and 7-B illustrate two exemplary examples of door system formed in the collapsible enclosure assembly.

### DETAILED DESCRIPTION OF THE DRAWINGS

In the following detailed description, numerous specific details are set forth in order to provide a thorough understanding of the invention. However, it will be understood by the person having ordinary skill in the art that the invention may be practised without these specific details. In other instances, well known methods, procedures and/or components have not been described in detail so as not to obscure the invention.

The invention will be more clearly understood from the following description of the embodiments thereof, given by way of example only with reference to the accompanying drawings, which are not drawn to scale.

As used in this disclosure and the appended claims herein, the singular forms "a", "an", and "the" include plural referents unless the context clearly dictates or denotes otherwise.

Throughout the disclosure and claims of this specification, the word "comprise" and variations of the word, such as "comprising" and "comprises," means "including but not limited to," and is not intended to exclude, for example, other components, integers or steps. "Exemplary" means "an example of' and is not intended to convey an indication of a preferred or ideal embodiment, "such as" is not used in a restrictive sense, but for explanatory purposes.

The word, term or phrase "enclosure assembly" mentioned throughout in this document is including but not limited to at least a cold room, shelter, walk-ins, container, room, area, space, place, storage room, chamber, cell, cubicle, or their equivalents.

The word, term or phrase "operative configuration" mentioned throughout in this document means the set-up position, erect position, assembled position, constructed position or built position, or the like. The word, term, or phrase "compact configuration" mentioned throughout in this document means the stowed position, packed position, disassembled position, or the like.

Generally, the embodiments of the present invention disclose a collapsible enclosure assembly (1) with easy deployment when needed or desired. The collapsible enclosure assembly (1) is collapsible or foldable from a compact configuration to an operative configuration, or from an operative configuration to a compact configuration, for providing a portable cold room that can be assembled and disassembled in minutes for private meeting, business conferences and meetings, or even private dining, wherein said room when assembled, is supplied with at least a detachable cooling means (3) for chilled or cool environment to enhance the users' experience.

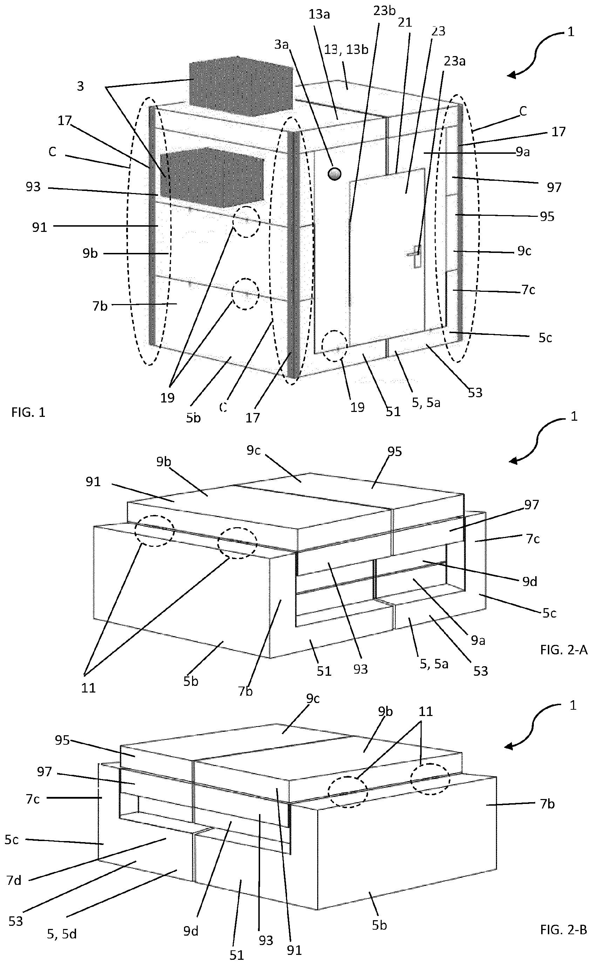

FIG. 1 illustrates the exemplary collapsible enclosure assembly (1) according to the preferred embodiment of the present invention, in an operative configuration. The collapsible enclosure assembly (1) comprising at least a base (5) defined by a plurality of peripheral sides (5a, 5b, 5,c 5d), preferably four peripheral sides (5a, 5b, 5,c 5d); at least an upstanding ledge (7) is perpendicularly formed on at least three peripheral sides (5b, 5c, 5d) of the base (5); a plurality of walls (9a, 9b, 9c, 9d), preferably comprising a left wall (9b) , a right wall (9c) and a rear wall (9d); the plurality of walls (9a, 9b, 9c, 9d) is interconnecting with the upstanding edges (7) or the base (5) via at least a connecting means (11); and a roof system (13) dimensioned and adapted to operatively engage the plurality of walls (9a, 9b, 9c, 9d) in the operative position to enclose or cover the top edges of the plurality of walls (9a, 9b, 9c, 9d), forming the enclosure assembly (1).

FIGS 2-A and 2-B illustrate an exemplary front perspective view and back perspective view of the collapsible enclosure assembly (1) in a compact configuration (the roof system is not shown), wherein the plurality walls (9a, 9b, 9c, 9d) are stowed or folded back to the base (5) via the connecting means (11).

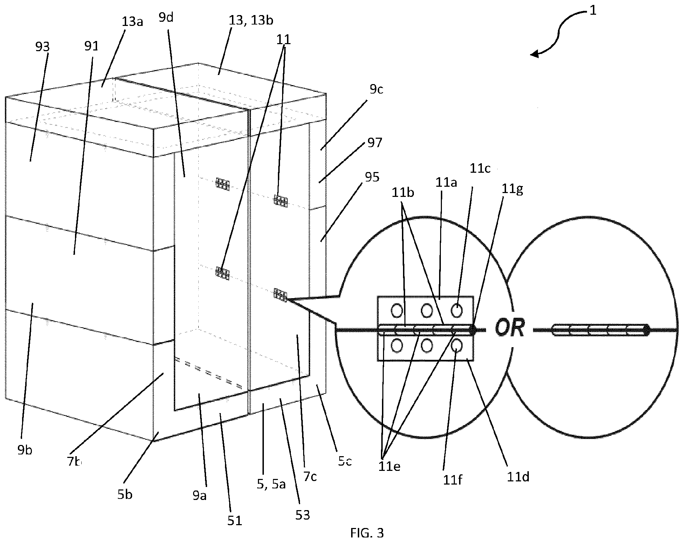

The connecting means (11) of the collapsible enclosure assembly (1) is a hinge, enabling the plurality of walls (9a, 9b, 9c, 9d) foldable or pivotable from a compact configuration to an operative configuration or from an operative configuration to a compact configuration. The hinge comprising a first moving plate (11a) comprised of a plurality of knuckles (11b) and a plurality of hole (11c); a second moving plate (11d) comprised of a plurality of knuckles (11e) and a plurality of hole (11f); and a pin (11g) that is inserted or penetrated into the knuckles (11b, 11e) of the first and second moving plates (11a, 11d). The knuckles (11b, 11e) of the first and second moving plates (11a, 11d) are preferably arranged in an alternate way to improve the strength of the hinge. The knuckles (11b, 11e) of the first and second moving plates (11a, 11d) are movable, rotatable foldable, pivotable over the pin (11g), thereby providing rotational movement or foldable movement for the moving plates (11a, 11d). The moving plates (11a, 11d) are preferably identical to each other. As shown in FIG 3, the moving plates (11a, 11d) are attached to the edges of walls or to the upstanding ledge, whereby an attaching means (11h), preferably a screw, is screwed into the holes (11c, 11f) of the first and moving plates (11a, 11d) and penetrated into the walls or upstanding ledges, thereby locking the hinge to the walls or upstanding leges, hence joining a wall with a wall or a wall with an upstanding ledge. The connecting means (11) can be attached in two configurations as shown in FIG. 3, as the rotational movement of the moving plates (11a, 11d) towards each other can be done in clockwise or anti-clockwise direction.

In one embodiment of the present invention, the left wall (9b) of the collapsible enclosure assembly (1) comprises at least two left panels (91, 93) wherein the first left panel's bottom side is joined with the left upstanding ledge (7b) and the first left panel's top side is joined with the second left panel (93) with at least an additional connecting means (11). The right wall (9c) comprises at least two right panels (95, 97) wherein the first right panel's bottom side is joined with the right upstanding ledge (7c) and the first right panel's top side is joined with the second right panel (97) with at least an additional connecting means (11).

In one embodiment of the present invention, the plurality of walls further comprises of a front wall (9a) and the collapsible enclosure assembly (1) may or may not comprising a front upstanding ledge (7a) (not shown). If the collapsible enclosure assembly (1) does not comprise a front upstanding ledge (7a), the front wall (9a) is joined with the front peripheral side (5a) of the base (5) via at least an additional connecting means (11). If the collapsible enclosure assembly (1) comprises a front upstanding ledge (7a), the front wall (9a) is joined with the front upstanding ledge (7a) via said additional connecting means (11).

The base (5) and the connected walls (9a, 9b, 9c, 9d) may form a substantially rectangular in shape, though other geometric and non-geometric shapes may be formed so long as the collapsible enclosure assembly (1) functions in accordance with the present invention as described herein.

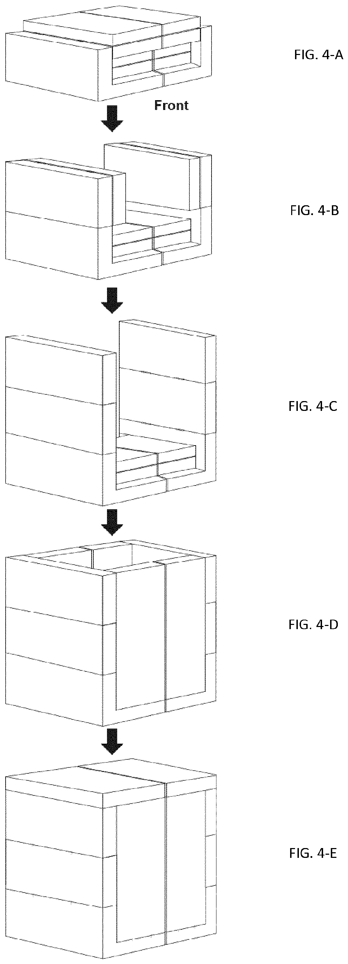

FIGS. 4-A to 4-E illustrates an exemplary folding process or assembling process of the collapsible enclosure assembly (1) according to the present invention. The roof system (13) that is originally placed on top of the collapsible enclosure assembly (1) (in a folded position or stowed position) is first removed as shown in FIG. 4-A. It can be deduced from the figure that the left wall (9b), right wall (9c), front wall (9a) and rear wall (9d) are folded inwardly and sandwiched between the base (5) and the roof system (13) in the compact or collapsed configuration.

As shown in FIG. 4-B, The left wall (9b) and right wall (9c) are then folded up or outwardly from the collapsible enclosure assembly (1) into a vertical or erect position, particularly the first left panel (91) and first right panel (95) are first folded up and rest on top of the left and right upstanding ledges (7b, 7c) respectively in the vertical axis, while the second left and right panels (93, 97) are also lifted up and hanged substantially parallel with the first left and right panels (91, 95) when the first left and right panels (91, 95) are folded up since the second left and right panels (93, 97) are joined with first left and right panels (91, 95) respectively. As shown in FIG. 4-C, the second left and right panels (93, 97) are then folded up or outwardly relative to the first left and right panels (91, 93) respectively and rest on top of the first left and right panels (91, 93) accordingly, thereby forming the entire left and right walls (9b, 9c) in an erect position in respect of the base (5).

Subsequently, as shown in FIG. 4-D the rear wall (9d) that is laying or resting on the front wall (9a) is folded up or outwardly and rests on the rear upstanding ledge (7d) vertically. Thereafter, the front wall (9a) that is laying or resting on the base (5) is folded up or outwardly and rests on the front peripheral side (5a) of the base (5) vertically. Eventually, the dimensioned roof system (13) is then placed back onto the top of the walls (9a, 9b, 9c, 9d), thereby enclosing or covering the collapsible enclosure assembly (1), as shown in FIG. 4-E.

In this embodiment, it should be understood that the collapsible enclosure assembly (1) does not comprise of a front upstanding ledge (7a) due to the purpose of providing different wall-to-ledge connecting points, enabling the pancake stacking of the plurality of walls (9a, 9b, 9c, 9d) in the compact configuration, for easy storage, deployment and convenient transportation. Hence, the front wall (9a) is joined with the front peripheral side (5a) with at least an additional connecting means (11).

The compact configuration of the collapsible enclosure assembly (1) is defined by having the left and right upstanding ledges (7b, 7c) with the same height, the rear upstanding ledge (7d) with a lower height than the left and right upstanding ledges (7b, 7c). As a result of such staggered order of wall-to-ledge, the walls (9a, 9b, 9c, 9d) are foldable in the manner whereby each wall pancake stacks on or underneath an adjacent wall when positioned in the compact configuration. Preferably, the front wall (9a) is first stacked on the base (5), followed by the rear wall (9d), and then the second left and right panels (93, 97) of left and right wall (9b, 9c) are folded inwardly and facing the first left and right panels (91, 95) respectively in a substantially parrallel manner, then the first left and right panels (91, 95) are folded down or inwardly relative to the respective left and right upstanding ledges (7b, 7c), thereby sandwiching the second left and right panels (93, 97) with the rear wall (9d). It can be deduced that the height of the rear upstanding ledge (7d) is substantially equal or similar to the thickness of the front wall (9a), enabling the rear wall (9d) to be stacked on the front wall (9a) steadily; and the height of the left and right upstanding ledges (7b, 7c) is at least or substantially similar or equal to the combined thickness of front wall (9a), rear wall (9d) and left (9b) or right wall (9c), so that the left and right wall (9b, 9c) can be stacked on the rear wall (9d) steadily, hence achieving a compact structure in a staggered arrangement. The whole structure takes on a compact package which can be stored until further use is desired.

Nevertheless, the collapsible enclosure assembly (1) may also comprise of a front upstanding ledge (7a) in another embodiment of the present invention, and the front wall (9a) is joined with the front upstanding ledge (7a) via the connecting means (11). The compact configuration in a pancake stacking structure of this embodiment is achievable by customizing or tailoring the height of the rear, left and right upstanding ledges (7b, 7c, 7d) or the thickness of the walls (9a, 9b, 9c, 9d).

In one embodiment, the left and right walls (9b, 9c) may comprise of more than two left and right panels respectively, wherein the left and right panels are foldably connected to each other via the connecting means (11) and the pancake stacking structure of this embodiment is also achievable by customizing or tailoring the height of the rear, left, right and/or front upstanding ledges (7b, 7c, 7d) or the thickness of the walls (9a, 9b, 9c, 9d).

In one embodiment, the roof system (13) may be subdivided into at least two roof panels such as first roof panel (13a) and second roof panel (13b) as shown in the figures, wherein said the first and second roof panels (13a, 13b) are joined with each other by at least a joining means (15). Said joining means (15) is preferably a mortise and tenon joint, comprising at least a projection (15a) formed on either first or second roof panels (13a, 13b) to be snap-fitted into at least a corresponding recess (15b) formed on either first or second roof panels (13a, 13b). Preferably, plurality of projections and recesses (15a, 15b) can be formed on either panel (13a, 13b). The projections (15a) have a shape of, including but not limited to, rectangular, square, round, regular shape, irregular shape, or any combination thereof, which is configured to be received and adapted by the shape of corresponding recesses (15b). It is contemplated that any other joining means can be used as the present invention deems fit and suitable. It should also be understood that the joining means may be an adhesive substance such as glue, or the like.

In one embodiment of the present invention, the collapsible enclosure assembly (1) may further comprise at least a first fastening means (17) to enhance and reinforce the rigidity of the collapsible enclosure assembly (1) in the operative configuration. The first fastening means (17) includes but not limited to angle bar, angle bracket, "L" bracket, or their combinations thereof. The first fastening means (17) is provided to the four corners of the collapsible enclosure assembly in the operative configuration, wherein the four corners are denoted as the letter "C" in the FIG. 1. The first fastening means (17) is adapted to the four corners (C) of the collapsible enclosure assembly (1) to reinforce the rigidity of the structure in the operative configuration as well as to prevent the various panels from collapsing upon themselves. Nevertheless, said first fastening means may not be used according to one embodiment, depending on the application.

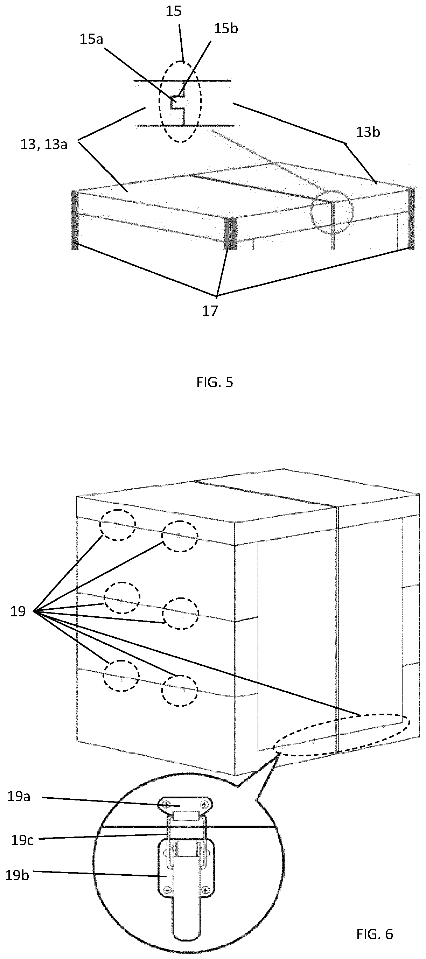

The roof system (13) of the collapsible enclosure assembly (1) according to one embodiment of the present invention may further be fastened with the plurality of walls (9a, 9b, 9c, 9d) via at least a second fastening means (19) wherein the second fastening means (19) includes but not limited to latch assembly, clasp assembly, clip assembly, clamp lock assembly, or any combination thereof. The second fastening means (19) may also be used to fasten the left upstanding ledge (7b) with the first left panel (91), the first left panel (91) with the second left panel (93), the right upstanding ledge (7c) with the first right panel (95), the first right panel (95) with the second right panel (97), the rear upstanding ledge (7d) with the rear wall (9d), and the front upstanding ledge (7a) with the front wall (9a) or the front peripheral side (5a) of the base (5) with the front wall (9a) so that the structure is further reinforced and is further prevented from collapsing upon themselves. Preferably, the second fastening means (19) comprising at least a first mounting plate (19a) and at least a second mounting plate (19b), wherein the mounting plates (19a, 19b) are fastened with at least a lock, hook, latch or fastener (19c), or the like, thereby fastening the connecting points, surface or area of the walls (9a, 9b, 9c, 9d) and ledges (7a, 7b, 7c, 7d), as illustrated in FIG. 6. Nevertheless, said second fastening means may not be used according to one embodiment, depending on the application.

In one embodiment, as shown in the figures, the base (5) of the collapsible enclosure assembly (1) may be subdivided into first base panel (51) and second base panel (53), wherein said the first and second base panels (51, 53) are joined with each other by at least a joining means (not shown), that is preferably similar with the joining means (15) of the first and second roof panels (13a, 13b). Said joining means of the base panels (51, 53) is preferably a mortise and tenon joint, comprising at least a projection formed on either first or second base panels (51, 53) to be snap-fitted into at least a corresponding recess formed on either first or second base panels (51, 53). Preferably, plurality of projections and recesses can be formed on either panel (51, 53). The projections have a shape of, including but not limited to, rectangular, square, round, regular shape, irregular shape, or any combination thereof, which is configured to be received and adapted by the shape of corresponding recesses. It is contemplated that any other joining means can be used as the present invention deems fit and suitable. It should also be understood that the joining means may be an adhesive substance such as glue, or the like. In this embodiment, the rear upstanding ledge (7d) and the rear wall (9d) may or may not be subdivided into two panels respectively having the same width of the base panels (51, 53). In the embodiment of having front upstanding ledge (7a), the front wall (9a) and front upstanding ledge (7a) may or may not be subdivided into two panels respectively having the same width of the base panels (51, 53). In the embodiment of not having front upstanding ledge (7a), the front wall (9a_ may or may not be subdivided into two panels respectively having the same width of the base panels (51, 53).

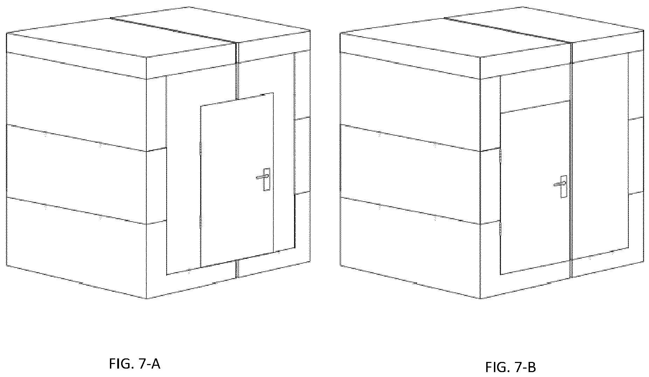

In one embodiment of the present invention, as shown in FIG. 1, at least a cut-out (21) is formed in at least a wall (9a, 9b, 9c, 9d) for installation of at least a window or door (23). Preferably, the front wall (9a) is formed with at least a door cut-out (21) for installation of at least a door (23), wherein the door (23) with a door knob or handle and door lock (23a) may be operatively attached along a periphery of the door cut-out (21) with door hinges (23b). Preferably, any one of the walls (9a, 9b, 9c, 9d) may be formed with at least a window cut-out (21) for installation of at least a window (not shown), wherein the window may be operatively attached along a periphery of the window cut-out. FIGS. 7-A and 7-B illustrate two exemplary configurations of door cut-out (21) and door (23).

In one embodiment of the present invention, as shown in FIG. 1, at least a detachable cooling means (3) and at least a temperature gauge (3a) are provided to the collapsible enclosure assembly (1) in an operative configuration. Said detachable cooling means (3) includes but not limited to a cooler, air conditioner, dehumidifier, ventilator, or their combinations thereof.

In one embodiment of the present invention, the joints, gaps or the connection points or surfaces of the enclosure assembly are supplied with at least a removable or detachable sealing means (not shown) in an operative configuration, to insulate or prevent cool or chill air from flowing out of the collapsible enclosure assembly (1). Said sealing means includes but not limited to a sealer, sealant, sealing insert, filler, or the like, or any combination thereof. The sealing means is preferably made of silicone materials.

While the present invention has been shown and described herein in what are considered to be the preferred embodiments thereof, illustrating the results and advantages over the prior art obtained through the present invention, the invention is not limited to those specific embodiments. Thus, the forms of the invention shown and described herein are to be taken as illustrative only and other embodiments may be selected without departing from the scope of the present invention, as set forth in the claims appended hereto. The scope of the invention encompasses numerous alternatives, modifications and the equivalents. Of necessity, there are many alternative ways of configuring and implementing the invention to suit particular installations and environments while providing biological outcomes of differing design.

## Claims

1. A collapsible enclosure assembly (1), comprising:
at least a base (5) defined by a plurality of peripheral sides (5a, 5b, 5c, 5d);
at least an upstanding ledge (7) is perpendicularly formed on at least three peripheral sides of the base (5);
a plurality of walls (9);
the plurality of walls (9) is interconnecting with the upstanding edges (7) or the base (5) via at least a connecting means (11);
**characterized in that**
one of the plurality of walls (9) is a left wall (9b), wherein the left wall (9b) comprises at least two left panels (91, 93) wherein the first left panel's bottom side is joined with the left upstanding ledge (7b) and the first left panel's top side is joined with the second left panel (93) with at least an additional connecting means (11);
one of the plurality of walls (1) is a right wall (9c), wherein the right wall (9c) comprises at least two right panels (95, 97) wherein the first right panel's bottom side is joined with the right upstanding ledge (7c) and the first right panel's top side is joined with the second right panel (97) with at least an additional connecting means (11);
the connecting means (11) is a hinge, enabling the plurality of walls (9) foldable or pivotable from a compact configuration to an operative configuration or from an operative configuration to a compact configuration;
the collapsible enclosure assembly (1) further comprising a roof system (13) dimensioned to operatively engage the plurality of walls (9) in the operative configuration to enclose the plurality of walls (9), forming the enclosure assembly (1).

2. A collapsible enclosure assembly (1), comprising:
at least a base (5) defined by four peripheral sides (5a, 5b, 5c, 5d);
at least an upstanding ledge (7) is perpendicularly formed on three peripheral sides of the base (5);
a plurality of walls (9) comprising a front wall (9a), a left wall (9b), a right wall (9c) and a rear wall (9d);
at least a connecting means (11) interconnecting the left wall (9b), the right wall (9c), the rear wall (9d) and the respective upstanding ledges (7b, 7c, 7d) respectively;
**characterized in that**
the left wall (9b) comprises at least two left panels (91, 93) wherein the first left panel's bottom side is joined with the left upstanding ledge (7b) and the first left panel's top side is joined with the second left panel (93) with at least an additional connecting means (11);
the right wall (9c) comprises at least two right panels (95, 97) wherein the first right panel's bottom side is joined with the right upstanding ledge (7c) and the first right panel's top side is joined with the second right panel (97) with at least an additional connecting means (11);
the front wall (9a) is joined with the front peripheral side (5a) of the base (5) with at least an additional connecting means (11);
the connecting means (11) is a hinge, enabling the plurality of walls (9a, 9b, 9c, 9d) foldable or pivotable from a compact configuration to an operative configuration or from an operative configuration to a compact configuration;
the collapsible enclosure assembly (1) further comprising a roof system (13) dimensioned to operatively engage the plurality of walls in the operative configuration to enclose the plurality of walls (9a, 9b, 9c, 9d), forming the enclosure assembly (1).

3. The collapsible enclosure assembly (1) as claimed in Claim 1 or 2, the base (5) of the collapsible enclosure assembly (1) is subdivided into left and right base panels (51, 53), wherein the left and right base panels (51, 53) is joined with each other by at least a joining means.

4. The collapsible enclosure assembly (1) as claimed in Claim 3, the joining means is a mortise and tenon joint, comprising at least a projection formed on either left or right base panel (51, 53) to be snap fitted into at least a corresponding recess formed on either left or right base panel (51, 53).

5. The collapsible enclosure assembly (1) as claimed in any one of the preceding claims, said roof system (13) is subdivided into left and right roof panels (13a, 13b), wherein said the left and right roof panels (13a, 13b) is joined with each other by at least a joining means (15).

6. The collapsible enclosure assembly (1) as claimed in Claim 5, said joining means (15) is a mortise and tenon joint, comprising at least a projection (15a) formed on either left or right roof panels (13a, 13b) to be snap fitted into at least a corresponding recess (15b) formed on either left or right roof panels (13a, 13b).

7. The collapsible enclosure assembly (1) as claimed in any one of the preceding claims, at least a first fastening means (17) is provided to at least a corner (C) of the collapsible enclosure assembly (1) in the operative configuration.

8. The collapsible enclosure assembly (1) as claimed in any one of the preceding claims, at least a second fastening means (19) is provided to fasten the roof system (13) with the plurality of walls (9a, 9b, 9c, 9d), to fasten the plurality of walls (9a, 9b, 9c, 9d) with the respective upstanding ledges (7a, 7b, 7c, 7d) or the base (5), and to fasten the first panel (91, 95) with the second panel (93, 97) of the left wall and right wall (9b, 9c), in the operative configuration.

9. The collapsible enclosure assembly (1) as claimed in Claim 7, the first fastening means (17) includes but not limited to angle bar, angle bracket, "L" bracket, or their combinations thereof.

10. The collapsible enclosure assembly (1) as claimed in Claim 8, wherein the second fastening means (19) includes but not limited to clasp assembly, clip assembly, clamp lock assembly, or any combination thereof.

11. The collapsible enclosure assembly (1) as claimed in any one of the preceding claims, wherein at least a cut-out (21) is formed in at least a wall (9a, 9b, 9c, 9d) for installation of at least a window or door (23).

12. The collapsible enclosure assembly (1) as claimed in any one of the preceding claims, wherein at least a detachable cooling means (3) and at least a temperature gauge (3a) are provided to the enclosure assembly (1) in an operative configuration.

13. The collapsible enclosure assembly (1) as claimed in Claim 12, said detachable cooling means (3) includes but not limited to a cooler, air conditioner, dehumidifier, ventilator, or their combinations thereof.

14. The collapsible enclosure assembly (1) as claimed in any one of the preceding claims, the joints or gaps of the enclosure assembly are supplied with at least a removable or detachable sealing means in an operative configuration.

15. The collapsible enclosure assembly (1) as claimed in Claim 14, said sealing means includes but not limited to a sealer, sealant, sealing insert, filler, or the like, or any combination thereof.

16. The collapsible enclosure assembly (1) as claimed in Claim 15, said sealing means is preferably made of silicone material.
